# EUROPÄISCHE PATENTANMELDUNG

(11) **EP 2 196 165 A1**
(43) Veröffentlichungstag der Anmeldung: **16.06.2010**
(21) Anmeldenummer: 09014506.1
(22) Anmeldetag: 20.11.2009
(51) Int. Cl.: A61C 8/00

(54) **Instrument zum Lösen eines Schraubenstumpfes einer Verbindungsschraube eines Zahnimplantats**

(30) Priorität: 10.12.2008 CH 19402008
(71) Anmelder: Straumann Holding AG, 4002 Basel (CH)
(72) Erfinder: Schuermann, Silvan, 4437 Waldenburg (CH); Mueller, Daniele, 4102 Binningen (CH)
(74) Vertreter: Schaad, Balass, Menzl & Partner AG

(57) **Zusammenfassung**

Instrument (1) zum Lösen eines Schraubenstumpfes (60) einer Verbindungsschraube eines Zahnimplantats, umfassend einen Haltebereich, einen Mittelbereich und einen Frontbereich (20) mit einem vom Haltebereich wegweisenden Wirkbereich (25) aufweist. Der Wirkbereich (25) besitzt eine mantelförmigen Aussenfläche sowie mehrere dornenförmige Zacken (30, 35, 40, 45) zum Eingreifen in eine obere Endfläche (62) des Schraubenstumpfes (60).

## Beschreibung

Die vorliegende Erfindung betrifft ein Instrument zum Lösen eines Schraubenstumpfes, insbesondere zum Lösen eines Schraubenstumpfes aus einem Zahnimplantat.

Die Verwendung von Zahnimplantaten als künstlichen Ersatz für Zahnwurzeln hat sich in den letzten Jahren im Bereich der Zahnprothetik etabliert. Es gibt verschiedene Formen von Zahnimplantaten, wobei sich insbesondere die schraubenförmigen Implantate bewährt haben. Typischerweise werden Zahnimplantaten aus Titan oder aus verschiedenen Keramiken verwendet.

Schraubenförmige Zahnimplantate bestehen üblicherweise aus einem Verankerungsteil zur Verankerung des Implantats im Knochen und einem Aufbauteil, auf dem eine Suprakonstruktion, beispielsweise eine Krone, befestigt werden kann. Wenn Verankerungsteil und Aufbauteil als ein einziges Bauteil ausgebildet sind, spricht man von einem einteiligen Implantat. Alternativ werden häufig auch zweiteilige Implantate verwendet, bei denen Verankerungsteil und Aufbauteil als zwei separate Bauteile ausgebildet sind. Bei der Implantation wird der schraubenförmige Verankerungsteil in ein passendes Bohrloch im Knochen eingeschraubt. Später wird dann die Suprakonstruktion am Aufbauteil des Implantats befestigt.

Bei zweiteiligen Implantaten werden der Verankerungsteil und der Aufbauteil üblicherweise mithilfe einer Verbindungsschraube miteinander verbunden. Zu diesem Zweck weisen Verankerungs- und Aufbauteil je ein Innengewinde auf. Nachdem der Verankerungsteil in den Knochen des Patienten implantiert worden ist, wird der Aufbauteil auf den Verankerungsteil aufgesteckt, so dass das Innengewinde des Aufbauteils genau in der Verlängerung desjenigen des Verankerungsteils liegt und die Verbindungsschraube eingeschraubt. Ein entsprechendes Zahnimplantatsystem ist beispielsweise in EP 1 728 486 beschreiben, wobei hier der Verankerungs- und Aufbauteil einen Innen- respektive Aussen-Achtkant aufweisen, um eine Rotation zwischen den beiden Implantatteilen zu verhindern.

Beim Einschrauben der Verbindungsschraube in das Innengewinde von Verankerungs- und Aufbauteil kann es ausnahmsweise vorkommen, dass die Schraube bricht. In diesem Fall muss der bereits in das Implantat eingeschraubte Schraubenstumpf der Verbindungsschraube wieder aus diesem entfernt werden. Dies ist insbesondere dann ein Problem, wenn die obere Endfläche des Schraubenstumpfes relativ glatt ist und keine Vorsprünge oder Vertiefungen aufweist: Aufgrund des Formschlusses zwischen Schraubenstumpf und Verankerungs- respektive Aufbauteil ist es nicht möglich, den Schraubenstumpf mit einer Pinzette zu entfernen.

Die einzige Möglichkeit, den Schraubenstumpf aus dem Innengewinde zu entfernen, besteht darin, den Schraubenstumpf heraus zu bohren. Dazu wird entlang der Mittelachse des Schraubenstumpfes ein Loch in den Schraubenstumpf gebohrt, das etwas kleiner ist als der Durchmesser der Schraube. Dieses Verfahren ist relativ heikel, da dabei der Verankerungs- und/oder Aufbauteil sehr leicht beschädigt werden können: Falls nicht genau in der Mittelachse des Schraubenstumpfes gebohrt wird, kann ein Teil des Innengewindes abgetragen werden; und falls zu tief gebohrt wird, wird der Verankerungsteil in der Verlängerung der Verbindungsschraube beschädigt. Eine Ungenauigkeit kann somit massive Auswirkungen auf die Stabilität des Implantats haben, und eine sehr genaue Bohrerführung ist unerlässlich. Ausserdem muss nach dem Ausbohren der Teil der Verankerungsschraube, der ausserhalb der Bohrung liegt - also insbesondere das Gewinde - aus dem Verankerungs- und Aufbauteil entfernt werden. Diese Prozedur ist insgesamt sehr aufwändig und fehleranfällig.

Es ist daher eine Aufgabe der vorliegenden Erfindung, ein Instrument zum Lösen eines Schraubenstumpfes, insbesondere eines Schraubenstumpfes aus einem Zahnimplantat zur Verfügung zu stellen, mit welchem der Schraubenstumpf rasch und problemlos aus dem Zahnimplantat herausgedreht werden und eine Beeinträchtigung des umliegenden Zahnimplantats vermieden werden kann.

Die Aufgabe wird gelöst durch das Instrument gemäss Anspruch 1. Weitere bevorzugte Ausführungsformen sind Gegenstand der abhängigen Ansprüche.

Das erfindungsgemässe Instrument zum Lösen eines Schraubenstumpfes umfasst einen Haltebereich, einen Frontbereich und einen Mittelbereich. Im Weiteren besitzt das Instrument eine mittig angeordnete Längsachse A. Der Haltebereich, der Mittelbereich, der Frontbereich und der Wirkbereich weisen eine gemeinsame, mittig angeordnete Längsachse auf, die mit der Längsachse A des Instruments übereinstimmt.

Der Haltebereich dient zum Festhalten des Instruments. Der Mittelbereich verbindet den Frontbereich mit dem Haltebereich. Der Frontbereich ist im Wesentlichen kreiszylinderförmig und weist einen vom Haltebereich wegweisenden Wirkbereich auf, der eine mantelförmige Aussenfläche sowie drei bis sechs dornenförmige Zacken aufweist. Diese dornenförmigen Zacken dienen zum Eingreifen in eine obere Endfläche des zu lösenden Schraubenstumpfes. Die dornenförmigen Zacken des Wirkbereichs sind in Umfangsrichtung gleichmässig um die Längsachse des Instruments verteilt.

Das erfindungsgemässe Instrument dient insbesondere dazu, einen zumindest teilweise in ein Zahnimplantat eingeschraubten Schraubenstumpf aus diesem zu lösen. Zu diesem Zweck weist das erfindungsgemässe Instrument dornenförmige Zacken zum Eingreifen in eine obere Endfläche des Schraubenstumpfes auf. Indem die dornenförmigen Zacken des Instruments gegen die obere Endfläche des Schraubenstumpfes gepresst werden und gleichzeitig ein Drehmoment auf das Instrument ausgeübt wird, kann Schraubenstumpf aus dem Implantat herausgedreht werden. Dabei werden die dornenförmigen Zacken nicht in die obere Endfläche hineingerammt, sondern die Drehmomentübertragung erfolgt aufgrund von Reibung auf der Oberfläche des Schraubenstumpfes. Auf diese Art und Weise wird die Belastung für das Zahnimplantat und auch für das umliegende Knochenwebe möglichst klein gehalten und eine Beeinträchtigung vermieden.

Der im Wesentlichen kreiszylinderförmige Frontbereich ist derart ausgestaltet, dass er problemlos in das Innengewinde im Verankerungs- und Aufbauteil des Implantats eingeführt werden kann. Vorzugsweise wird der Durchmesser des Frontbereichs nur wenig kleiner als derjenige des Innengewindes gewählt, so dass das Instrument beim Lösen des Schraubenstumpfes durch die Innenwände der Implantatteile geführt wird.

In einer bevorzugten Ausführungsform liegen die Spitzen der dornenförmigen Zacken auf der mantelförmigen Aussenfläche des Wirkbereichs. Durch diese Anordnung der Zacken wird die Drehmoment-Übertragung vom erfindungsgemässen Instrument auf den Schraubenstumpf optimiert. Ausserdem ist die Herstellung des Frontbereichs, welche vorzugsweise durch Beschleifen eines im Wesentlichen zylinderförmigen Stiftes erfolgt, deutlich einfacher als bei Zacken, deren Spitzen weiter innen liegen. Die Festigkeit der Zacken ist bei einer derartigen Anordnung ebenfalls besonders gut.

Alternativ können die Spitzen der dornenförmigen Zacken auch weiter innen liegen.

In einer bevorzugten Ausführungsform sind der Haltebereich und/oder der Mittelbereich im Wesentlichen kreiszylinderförmige ausgebildet. Diese Ausgestaltung erlaubt eine einfache maschinelle Anfertigung des Instruments. Ausserdem kann bei dieser Ausführungsform der Mittelbereich des erfindungsgemässen Instruments als Führungsbereich dienen, wobei der Mittelbereich durch die im Wesentlichen kreiszylinderförmigen Innenflächen von Verankerungs- und Aufbauteil des Implantats geführt wird. Dadurch wird die Handhabung des Instruments wesentlich vereinfacht.

In einer weiteren bevorzugten Ausführungsform weist der Wirkbereich des Instruments vier dornenförmige Zacken auf. Diese Anordnung erlaubt eine optimale Übertragung eines Drehmoments auf den Schraubenstumpf zum Lösen desselben.

Vorzugsweise weist jede einzelne Zacke des Wirkbereichs im Wesentlichen drei Flächen auf, die bei der Spitze der Zacke zusammentreffen:
(i) eine erste, gewölbte Fläche, die mit der mantelförmigen Aussenfläche des Wirkbereichs zusammenfällt,
(ii) eine zweite, ebene Fläche, die parallel zur Längsachse A des Instruments verläuft, und
(iii) eine dritte, ebene Fläche, die gegenüber der Längsachse um einen Winkel α geneigt ist.

Die zweiten und dritten, als "eben" bezeichneten Flächen sind im Gegensatz zur ersten mantelförmigen Fläche nicht gewölbt. Der Begriff "eben" wird hier und im weiteren Verlauf dieses Anmeldungstextes entsprechend verwendet. Diese Zackenform erlaubt eine besonders gute Drehmoment-Übertragung vom Erfindungsgemässen Instrument auf den Schraubenstumpf. Ausserdem ist die Herstellung des Frontbereichs, welche vorzugsweise durch Beschleifen eines im Wesentlichen zylinderförmigen Stiftes erfolgt, deutlich einfacher als bei anderen Zackenformen. Die Stabilität der Zacken ist ebenfalls besonders gut.

Vorzugsweise liegt die zweite, parallel zur Längsachse A liegende Fläche einer Zacke im Gegenuhrzeigersinn vor der dritten, geneigten Fläche derselben Zacke. Zur Bestimmung des Uhrzeigersinns wird hier und im weiteren Verlauf des Texts davon ausgegangen, dass das erfindungsgemässe Instrument von der Seite der Spitzen der dornenförmigen Zacken her betrachtet wird und Uhrzeigersinn, respektive Gegenuhrzeigersinn, entsprechend bestimmt werden. Die zweite, parallel zur Längsachse A liegende Fläche einer Zacke liegt also im Gegenuhrzeigersinn vor der dritten, geneigten Fläche derselben Zacke, falls man, wenn man von der zweiten Fläche aus im Gegenuhrzeigersinn vorgeht, zur dritten Fläche derselben Zacke gelangt.

Vorzugsweise sind die parallel zur Längsachse A liegende zweite Fläche und die geneigte dritte Fläche derart angeordnet, dass die parallel zur Längsachse A liegende Fläche beim Lösen des Schraubenstumpfes vorangeht. Wenn also zum Lösen des Schraubenstumpfes das Instrument in Gegenuhrzeigersinnrichtung gedreht werden muss, was bei den heute üblichen Gewinden der Fall ist, dann liegt die zweite, parallel zur Längsachse A liegende Fläche einer Zacke vorzugsweise vor der dritten, geneigten Fläche derselben Achse. Durch diese Anordnung kann die Übertragung des Drehmoments auf den Schraubenstumpf optimiert werden, so dass möglichst wenig Kraft aufgewendet werden muss und die Belastung für das Implantat und das umliegende Knochengewebe möglichst gering gehalten werden kann.

Vorzugsweise ist die dritte, geneigte Fläche um einen Winkel α von 30 - 60°, vorzugsweise von 45°, gegenüber der Längsachse A des Instruments geneigt.

In einer weiteren bevorzugten Ausführungsform weist jede einzelne Zacke des erfindungsgemässen Instruments im Wesentlichen drei Flächen auf, die bei der Spitze zusammentreffen:
(i) Eine erste, gewölbte Fläche, die mit der mantelförmigen Aussenfläche des Wirkbereichs zusammenfällt,
(ii) eine zweite, ebene Fläche, die gegenüber der Längsachse A um einen Winkel β geneigt ist, und
(iii) eine dritte, ebene Fläche, die gegenüber der Längsachse um einen Winkel γ geneigt ist.

Vorzugsweise betragen die beiden Winkel β und γ unabhängig voneinander 10 - 45°, besonders bevorzugt 20 - 30°.

In einer weiteren bevorzugten Ausführungsform weist jede einzelne Zacke des Wirkbereichs im Wesentlichen drei Flächen auf, die bei der Spitze zusammentreffen:
(i) Eine erste, gewölbte Fläche, die mit der mantelförmigen Aussenfläche des Wirkbereichs zusammenfällt,
(ii) eine zweite, nach innen gewölbte Fläche, die gegenüber der Längsachse A um einen Winkel δ geneigt ist, und
(iii) eine dritte, nach innen gewölbte Fläche, die gegenüber der Längsachse um einen Winkel ε geneigt ist.

Vorzugsweise betragen die beiden Winkel δ und ε unabhängig voneinander 10 - 45°, besonders bevorzugt 20 - 30°.

In einer bevorzugten Ausführungsform ist der Haltebereich des erfindungsgemässen Instruments derart ausgebildet, dass von Hand ein Drehmoment auf das Instrument übertragen werden kann. Dies erlaubt ein einfaches Herausdrehen des Schraubenstumpfes ohne grossen Aufwand und ohne dass ein weiteres Werkzeug nötig wäre.

Alternativ ist es auch möglich, dass der Haltebereich des erfindungsgemässen Instruments derart ausgebildet ist, dass mittels einer Ratsche ein Drehmoment auf das Instrument übertragen werden kann. Dadurch können grössere Drehmomente auf das erfindungsgemässe Instrument und damit auf den Schraubenstumpf übertragen werden.

In einer bevorzugten Ausführungsform sind Material und Formgebung des erfindungsgemässen Instruments derart gewählt, dass das Instrument nach einer Verwendung sterilisiert und später erneut zum Lösen eines Schraubenstumpfes, insbesondere aus einem Zahnimplantat, verwendet werden kann. Bei der Formgebung muss insbesondere darauf geachtet werden, dass das Instrument keine Hinterschneidungen oder sonstige bei der Sterilisation schwierig zugänglichen Bereiche aufweist. Alternativ kann das Instrument auch für den einmaligen Gebrauch bestimmt sein.

In einer bevorzugten Ausführungsform besteht mindestens der Wirkbereich des erfindungsgemässen Instruments aus einem festen, leicht sterilisierbaren Material, insbesondere aus einem Metall. Besonders bevorzugt besteht mindestens der Wirkbereich aus rostfreiem Stahl, beispielsweise aus Cronidur^{®}. Vorzugsweise besteht nicht nur der Wirkbereich, sondern das gesamte Instrument aus einem solchen Material, insbesondere aus rostfreiem Stahl. Dadurch wird die Herstellung, Reinigung und Sterilisation des erfindungsgemässen Instruments wesentlich vereinfacht.

Im Weiteren betrifft die vorliegende Erfindung die Verwendung eines erfindungsgemässen Instruments zum Lösen eines Schraubenstumpfes, insbesondere zum Lösen eines Schraubenstumpfes aus einem Zahnimplantat. Wie oben beschrieben, ist die Verwendung des erfindungsgemässen Instruments insbesondere dann von Vorteil, wenn die obere Endfläche des Schraubenstumpfes sehr glatt ist. In diesem Fall kann der Schraubenstumpf mithilfe des erfindungsgemässen Instruments aus dem Implantat entfernt werden, ohne dass das Implantat und das umliegende Knochengewebe dadurch beeinträchtigt würde.

Es zeigt:
- Fig. 1: eine Seitenansicht eines erfindungsgemässen Instruments;
- Fig. 2: eine Seitenansicht des Front- und Mittelbereichs eines erfindungsgemässen Instruments;
- Fig. 3: eine schräge Draufsicht des Front- und Mittelbereichs eines erfindungsgemässen Instruments;
- Fig. 4: eine schräge Draufsicht des Frontbereichs eines erfindungsgemässen Instruments;
- Fig. 5: eine schematische Darstellung der Verwendung eines erfindungsgemässen Instruments zum Lösen eines Schraubenstumpfes aus einem Zahnimplantat.

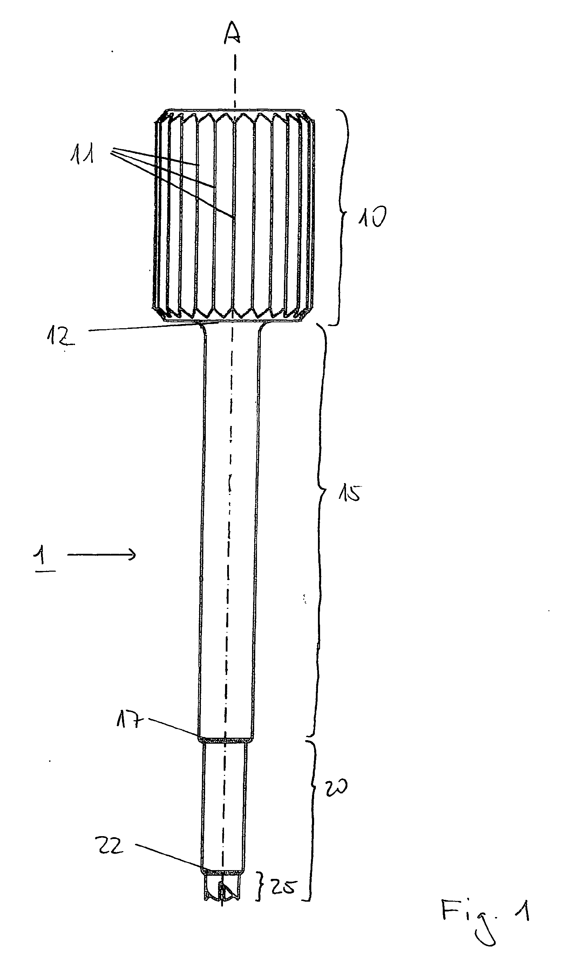

Figur 1 zeigt ein erfindungsgemässes Instrument 1 zum Lösen eines Schraubenstumpfes. Das gezeigte Instrument 1 besteht aus rostfreiem Stahl und weist einen Haltebereich 10, einen Mittelbereich 15 und einen Frontbereich 20 auf und besitzt eine mittig angeordnete Längsachse A. Der Frontbereich 20 weist einen vom Haltebereich 10 wegweisenden Wirkbereich 25 auf. In der gezeigten Ausführungsform sind der Haltebereich 10, der Mittelbereich 15 und der Frontbereich 20 im Wesentlichen kreiszylinderförmig ausgebildet, wobei der Durchmesser vom Haltebereich 10 über den Mittelbereich 15 zum Frontbereich 20 jeweils abnimmt. Der Durchmesser des Mittelbereichs ist derart gewählt, dass der Mittelbereich beim Lösen des Schraubenstumpfes durch das Implantat geführt wird. Die Dimensionen des Frontbereichs sind ebenfalls an die Ausmasse von Schraubenstumpf sowie Verankerungs- und Aufbauteil angepasst. Zwischen dem Haltebereich 10 und dem Mittelbereich 15 ist ein erster Übergangsbereich 12 angeordnet, dessen Durchmesser von demjenigen des Haltebereichs 10 in denjenigen des Mittelbereichs 15 übergeht. Zwischen dem Mittelbereich 15 und dem Frontbereich 20 ist ein zweiter Übergangsbereich 17 angeordnet, dessen Durchmesser von demjenigen des Mittelbereichs 15 in denjenigen des Frontbereichs 20 übergeht. Schliesslich weist das gezeigte Instrument 1 einen dritten Übergangsbereich 22 auf, der an den Wirkbereich 25 anschliesst.

Der Haltebereich 10 weist mehrere lamellenartige, parallel zur Längsachse A des Instruments 1 verlaufende Vorsprünge 11 auf, die das Festhalten des Instruments 1 erleichtern und ein Abrutschen verhindern sollen. Diese lamellenartigen Vorsprünge 11 weisen keine Hinterschneidungen auf, so dass das Instrument 1 gut sterilisiert werden kann. Ausserdem sind sie derart ausgebildet, dass ein geeignetes Werkzeug mit den Vorsprüngen 11 zusammenwirken kann.

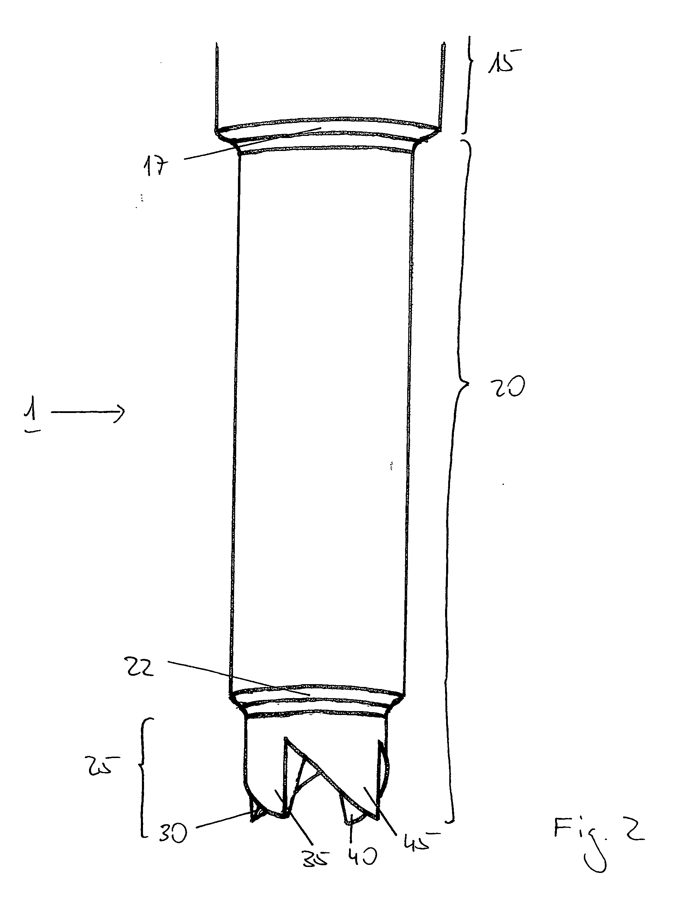

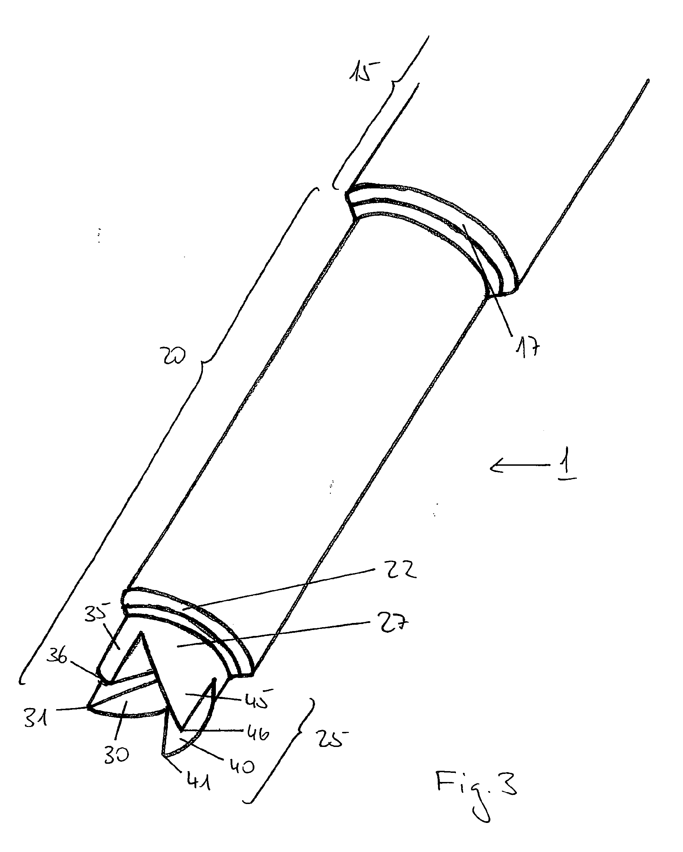

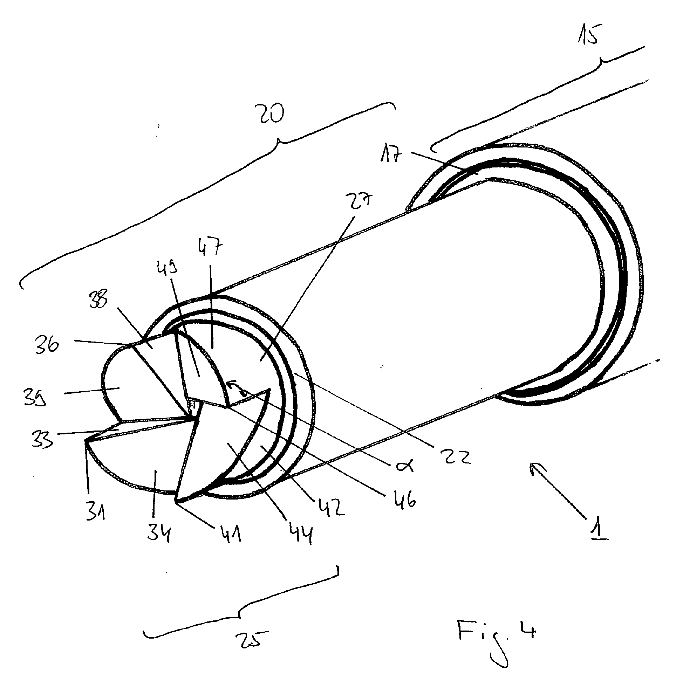

Die Figuren 2 bis 4 zeigen vergrösserte Seitenansichten und schräge Draufsichten des Mittelbereichs 15, des Frontbereichs 20 und des Wirkbereichs 25 des Instruments 1. Der in den Figuren 1 bis 5 gezeigte Wirkbereich 25 weist vier dornenförmige Zacken 30, 35, 40 und 45 auf, die in Umfangsrichtung gleichmässig um die Längsachse A verteilt sind (Figur 2). Die Spitzen 31, 36, 41 und 46 der vier dornenförmigen Zacken 30, 35, 40 und 45 liegen auf der mantelförmigen Aussenfläche 27 des Wirkbereichs 25 (Figur 3). Jede der vier dornenförmigen Zacken 30, 35, 40 und 45 weist im Wesentlichen drei Flächen auf, die bei der Spitze 31, 36, 41 oder 46 zusammentreffen (Figur 4): Eine erste, gewölbte Fläche 42, 47 fällt mit der mantelförmigen Aussenfläche 27 des Wirkbereichs 25 zusammen, eine zweite, ebene Fläche 33, 38 liegt parallel zur Längsachse A des Instruments 1 und eine dritte, ebene Fläche 24, 39, 44, 49 ist gegenüber der Längsachse A um einen Winkel α geneigt.

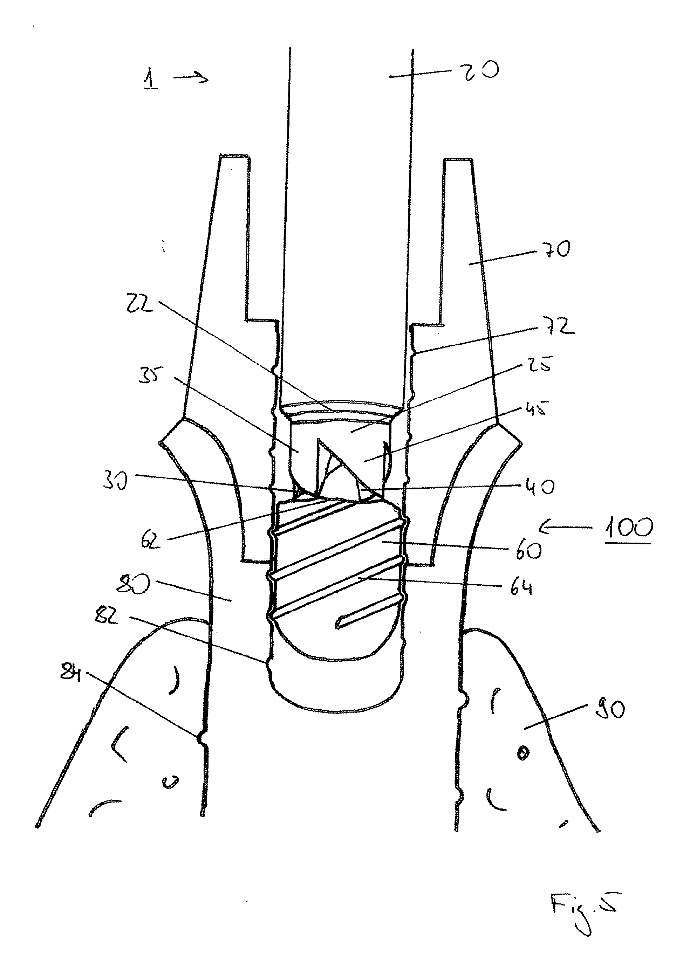

Figur 5 zeigt schematisch einen Querschnitt durch ein in einen Kieferknochen 90 eingebrachtes Zahnimplantat 100. Das Zahnimplantat 100 umfasst einen Verankerungsteil 80 und einen Aufbauteil 70, welcher auf den Verankerungsteil 80 aufgesteckt ist. Der Verankerungsteil 80 weist ein Aussengewinde 84 auf zur Verankerung des Zahnimplantats 100 im Kieferknochen 90. Sowohl der der Aufbauteil 70 als auch der Verankerungsteil 80 weisen je ein Innengewinde 72, 82 auf, wobei das Innengewinde 72 des Aufbauteils 70 genau in der axialen Verlängerung des Innengewindes 82 des Verankerungsteils liegt. Im Innengewinde 72, 82 steckt ein Schraubenstumpf 60, also ein abgebrochener Teil einer Verbindungsschraube. Der Schraubenstumpf 60 weist ein Aussengewinde 64 zur Verankerung im Innengewinde 72, 82 des Zahnimplantats 100 auf. An seinem koronalen Ende weist der Schraubenstumpf 60 eine im Wesentlichen gerade obere Endfläche 62 auf. Das erfindungsgemässe Instrument 1, von dem in der Figur der Frontbereich 20, der dritte Übergangsbereich 22 und der Wirkbereich 25 mit seinen vier dornenförmigen Zacken 30, 35, 40, 45 zu sehen sind, wird dazu verwendet, den Schraubenstumpf 60 aus dem Innengewinde 72, 82 zu entfernen. Dazu werden die vier dornenförmigen Zacken 30, 35, 40, 45 des Wirkbereichs 25 gegen die obere Endfläche 62 des Schraubenstumpfes 60 gepresst. Durch Drehen des Instruments 1 kann ein Drehmoment auf den Schraubenstumpf 60 übertragen und dieser so aus dem Zahnimplantat 100 gelöst werden.

## Patentansprüche

1. Instrument (1) zum Lösen eines Schraubenstumpfes (60) einer Verbindungsschraube eines Zahnimplantats (100), umfassend
(a) einen Haltebereich (10) zum Festhalten des Instruments (1),
(b) einen im Wesentlichen kreiszylinderförmigen Frontbereich (20) mit einem vom Haltebereich (10) wegweisenden Wirkbereich (25), der eine mantelförmigen Aussenfläche (27) und drei bis sechs dornenförmige Zacken (30, 35, 40, 45) zum Eingreifen in eine obere Endfläche (62) des Schraubenstumpfes aufweist, und
(c) einen Mittelbereich (15), der den Frontbereich (20) mit dem Haltebereich (10) verbindet,
wobei das Instrument (1) eine mittig angeordnete Längsachse A aufweist und
der Haltebereich (10), der Mittelbereich (15), der Frontbereich (20) und der Wirkbereich (25) eine gemeinsame, mittig angeordnete Längsachse aufweisen, die mit der Längsachse A des Instruments (1) übereinstimmt,
**dadurch gekennzeichnet, dass**
die dornenförmigen Zacken (30, 35, 40, 45) des Wirkbereichs (25) in Umfangsrichtung gleichmässig um die Längsachse verteilt sind.

2. Instrument (1) gemäss Anspruch 1, **dadurch gekennzeichnet, dass** die Spitzen (31, 36, 41, 46) der dornenförmigen Zacken (30, 35, 40, 45) auf der mantelförmigen Aussenfläche (27) des Wirkbereichs liegen.

3. Instrument (1) gemäss Anspruch 1 oder 2, **dadurch gekennzeichnet, dass** der Haltebereich (10) und/oder der Mittelbereich (15) im Wesentlichen kreiszylinderförmig ist.

4. Instrument (1) gemäss einem der Ansprüche 1 bis 3, **dadurch gekennzeichnet, dass** der Wirkbereich (25) vier dornenförmige Zacken (30, 35, 40, 45) aufweist.

5. Instrument (1) gemäss einem der Ansprüche 1 bis 4, **dadurch gekennzeichnet, dass** jede einzelne Zacke (30, 35, 40, 45) im Wesentlichen drei Flächen aufweist, die bei der Spitze (31, 36, 41, 46) zusammentreffen, wovon eine erste, gewölbte Fläche (42, 47) mit der mantelförmigen Aussenfläche (27) des Wirkbereichs (25) zusammenfällt, eine zweite, ebene Fläche (33, 38) parallel zur Längsachse A des Instruments (1) liegt und eine dritte, ebene Fläche (34, 39, 44, 49) gegenüber der Längsachse A um einen Winkel α geneigt ist.

6. Instrument (1) gemäss Anspruch 5, **dadurch gekennzeichnet, dass** die zweite, parallel zur Längsachse A liegende Fläche (33, 38) einer Zacke (30, 35, 40, 45) im Gegenuhrzeigersinn vor der dritten, geneigten Fläche (34, 39, 44, 49) derselben Zacke (30, 35, 40, 45) liegt.

7. Instrument (1) gemäss einem der Ansprüche 5 oder 6, **dadurch gekennzeichnet, dass** der Winkel α 30 bis 60°, vorzugsweise 45°, beträgt.

8. Instrument (1) gemäss einem der Ansprüche 1 bis 4, **dadurch gekennzeichnet, dass** jede einzelne Zacke (30, 35, 40, 45) im Wesentlichen drei Flächen aufweist, die bei der Spitze (31, 36, 41, 46) zusammentreffen, wovon eine erste, gewölbte Fläche mit der mantelförmigen Aussenfläche (27) des Wirkbereichs (25) zusammenfällt, eine zweite, ebene Fläche gegenüber der Längsachse A um einen Winkel β geneigt ist und eine dritte, ebene Fläche gegenüber der Längsachse um einen Winkel γ geneigt ist.

9. Instrument (1) gemäss einem der Ansprüche 1 bis 4, **dadurch gekennzeichnet, dass** jede einzelne Zacke (30, 35, 40, 45) im Wesentlichen drei Flächen aufweist, die bei der Spitze (31, 36, 41, 46) zusammentreffen, wovon eine erste, gewölbte Fläche mit der mantelförmigen Aussenfläche (27) des Wirkbereichs (25) zusammenfällt, eine zweite, nach innen gewölbte Fläche gegenüber der Längsachse A um einen Winkel δ geneigt ist und eine dritte, nach innen gewölbte Fläche gegenüber der Längsachse A um einen Winkel ε geneigt ist.

10. Instrument (1) gemäss einem der Ansprüche 1 bis 9, **dadurch gekennzeichnet, dass** der Haltebereich (10) derart ausgebildet ist, dass von Hand ein Drehmoment auf das Instrument (1) übertragen werden kann.

11. Instrument (1) gemäss einem der Ansprüche 1 bis 9, **dadurch gekennzeichnet, dass** der Haltebereich (10) derart ausgebildet ist, dass mittels einer Ratsche ein Drehmoment auf das Instrument (1) übertragen werden kann.

12. Instrument (1) gemäss einem der Ansprüche 1 bis 11, **dadurch gekennzeichnet, dass** mindestens der Wirkbereich (25) aus rostfreiem Stahl besteht.

13. Instrument (1) gemäss Anspruch 12, **dadurch gekennzeichnet, dass** das gesamte Instrument (1) aus rostfreiem Stahl besteht.

14. Verwendung eines Instruments (1) gemäss einem der Ansprüche 1 bis 13 zum Lösen eines Schraubenstumpfes (60) einer Verbindungsschraube eines Zahnimplantats (100).
